# FASCICULE DE BREVET EUROPEEN

(11) **EP 0 481 893 B1**
(45) Date de publication et mention de la délivrance du brevet: **22.06.1994**
(21) Numéro de dépôt: 91402770.1
(22) Date de dépôt: 16.10.1991
(51) Int. Cl.: A23J 3/14, A23J 3/16, A23J 3/18, A23K 1/18

(54) **Procédé de tonnage des substances protéiques, notamment des substances protéiques végétales telles que les protéines d'oléagineux et substances protéiques tannées obtenues par ce procédé**
Verfahren zum Gerben von Proteinsubstanzen, insbesondere pflanzliche Proteinsubstanzen sowie ölige Proteine und nach diesem Verfahren hergestellte gegerbte Proteinsubstanzen
Process for tanning protein substances, specially vegetal protein substances like oil-bearing seed protein and the tanned protein substances obtained by this process

(30) Priorité: 19.10.1990 FR 9012979
(43) Date de publication de la demande: 22.04.1992
(73) Titulaire: DEGREMONT ERPAC, F-59290 Wasquehal (FR); SOCIETE NATIONALE DE COMMERCIALISATION DES OLEAGINEUX DU SENEGAL, Dakar (SN)
(72) Inventeur: Fromont, Jacques Pierre, F-77150 Lesigny (FR); Portilla, Claude, F-64107 Bayonne (FR)
(74) Mandataire: Kedinger, Jean-Paul

(56) Documents cités:
- FR-A- 1 604 820
- US-A- 3 781 440

## Description

La présente invention a pour objet un procédé de tannage des substances protéiques, notamment des substances protéiques végétales telles que les protéines d'oléagineux.

On sait que la plupart des substances protéiques sont susceptibles de subir une dégradation (désamination) totale ou partielle en ammoniac sous l'action de la flore digestive. Une telle dégradation, plus particulièrement observée chez les animaux polygastriques tels que les ruminants, est préjudiciable à !a valeur nutritive desdites substances.

On a déjà cherché, dans le passé, à remédier à un tel état de chose en protégeant les substances protéiques en cause contre l'action désaminante de la flore digestive de l'être qui les consomme. FR-A-1 604 820 décrit le traitement des substances protéiques. A cet effet, il a été aussi proposé de soumettre ces substances à l'action d'un agent tannant, le formol, qui a la propriété de bloquer en tout ou partie les groupes aminés susceptibles de subir la désamination bactérienne.

Toutefois, le formol étant cancérigène, il est appelé à un emploi de plus en plus strict dans le domaine agro-alimentaire et dans certains cas son utilisation a d'ores et déjà été interdite, notamment aux U.S.A. et en Suisse.

Les Demanderesses ont, dans ces conditions, entrepris un certain nombre d'études en vue de mettre au point un produit de substitution du formol, dont l'emploi ne puisse soulever aucune réticence auprès des hygiénistes et toxicologues. Elles ont ainsi mis en évidence que des composés du type dithiocarhamate, font preuve d'une action tannante des protéines tout à fait intéressante comme cela sera explicité ci-après.

En conséquence, la présente invention concerne un procédé du type spécifié au premier paragraphe de cette description, qui se caractérise en ce qu'il comprend le traitement des substances protéiques par un composé du type dithiocarbamate, partiellement dégradé par un acide fort, par exemple un acide minéral tel que l'acide chlorhydrique, ce composé ayant de préférence la formule suivante : 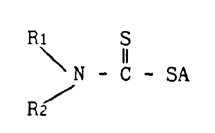
dans laquelle A = H ou métal (par exemple métal alcalin comme le sodium) et R₁ et R₂ représentent chacun indépendamment l'un de l'autre H, alkyle en C₁-C₄ ou cycloalkyle en C₃-C₇.

On notera tout d'abord que le composé mis en oeuvre selon l'invention entre dans une classe chimique sans rapport aucun avec celle du formol.

D'autre part, il a été observé que le traitement de tannage selon l'invention faisait intervenir un processus de vulcanisation par le soufre par opposition au traitement de tannage par le formol qui fait intervenir des réactions de méthylation ; le mode d'action des dithiocarbamates est donc tout à fait original par rapport à celui du formol.

En outre, ce tannage par vulcanisation provoque la transformation des protéines en complexes insolubles dans l'eau qui, s'ils ne sont pas sensibles à l'action bactérienne désaminante, sont néanmoins dissociables par les enzymes protéolytiques, secrétés par les organes digestifs, de sorte qu'il y a meilleure utilisation de l'azote et, partant, amélioration certaine de la qualité nutritive des protéines.

Il convient également de souligner que si les taux de diminution de dégradation des protéines, obtenus par le traitement selon l'invention sont voisins de ceux obtenus par traitement de tannage par le formol, les doses de composé de type dithiocarbamate nécessaires pour obtenir ce résultat sont cependant inférieures aux doses de formol. Ainsi, dans le cas de l'utilisation d'un diméthyldithiocarbamate tel que le diméthyldithiocarbamate de sodium, les doses sont dix fois inférieures à celles du formol, ce qui est tout à fait considérables.

On ajoutera que ce dithiocarbamate est un produit agréé par la Food and Drug Administration aux U.S.A. et par le Ministère de la Santé Publique en France et qu'il répond aux normes du Conseil Supérieur de l'Hygiène Publique en Suisse. De plus, il n'a pas d'effet négatif sur la microflore digestive de l'être qui l'absorbe ou sur la santé de ce dernier.

Bien que le mécanisme de vulcanisation n'ait pas encore été clairement établi, on a cependant avancé l'hypothèse que sous l'effet de l'acide fort et des conditions de réaction, il y aurait décomposition du dithiocarbamate avec formation de soufre colloïdal et de CS₂, ce dernier réagissant avec les groupes amine des protéines pour donner naissance à des entités soufrés catalysant la vulcanisation par le soufre.

La quantité de dithiocarbamate à mettre en oeuvre selon l'invention pourra notamment se situer dans l'intervalle allant de 0,01 % à 5 % en poids par rapport au poids des matières azotées totales de la substance protéique à traiter. On précisera que le poids des matières azotées totales est donné par l'expression "% N₂ x 6,25", où "% N₂" représente le pourcentage d'azote total de la substance protéique, déterminé par la méthode de dosage bien connue de Kjeldahl.

Par ailleurs, le dithiocarbamate sera commodément utilisé sous la forme d'une suspension ou solution aqueuse et utilisation pourra notamment être faite du "SONAPAC 78" commercialisé par la société ERPAC et qui est une solution aqueuse à 35 % (p/v) d'un mélange de diméthyldithiocarbamate de sodium et de diméthyltétrahydrothiadiazine (agent bactéricide).

Quant à l'acide fort, il est de préférence ajouté à la suspension ou solution du dithiocarbamate juste avant utilisation de ce dernier, la quantité de cet acide représentant avantageusement 4 à 10 % en poids du dithiocarbamate.

Le traitement de tannage sera de préférence effectué dans un milieu contenant uniquement de l'eau à titre de solvant ou diluant. La quantité d'eau à utiliser dépend notamment de la nature de la substance protéique à traiter, du degré de vulcanisation souhaitée et de la température de traitement ; elle peut en particulier se situer dans la plage allant de 10 à 300 % en poids de la substance protéique, et elle sera de préférence d'autant plus élevée que la température de traitement est basse.

Le procédé de tannage par vulcanisation selon l'invention est applicable notamment aux matières protéiques d'origine végétale, par exemple celles convenant pour l'alimentation animale telles que les tourteaux de graines oléagineuses comme le soja, le colza et l'arachide ou les graines et farines de céréales.

Il convient de rappeler ici que les tourteaux d'oléagineux sont naturellement contaminés par un micro-champignon dénommé Aspergillus Flavus qui provoque la formation, au sein de ces tourteaux, d'une mycotoxine appelée l'aflatoxine considérée comme un poison et cancérigène.

Dans ces conditions, il est usuel de soumettre ces tourteaux à une détoxication ayant pour but de détruire l'aflatoxine et les souches d'Aspergillus Flavus, cette détoxication consistant dans le traitement par une base, habituellement l'ammoniac.

Il a cependant été constaté qu'au cours de ce traitement, il y a augmentation importante de la proportion des protéines solubles, ce qui a pour inconvénient d'augmenter dans une forte mesure la dégradation (désamination) en ammoniac des protéines sous l'action de la flore digestive de l'être qui absorbe ces dernières.

Le traitement selon l'invention permettant, comme cela a été indiqué précédemment, de réduire dans une proportion importante le pourcentage des protéines solubles, il est également recommandé pour les tourteaux d'oléagineux détoxiqués.

Selon un mode de réalisation possible et non limitatif, le procédé selon l'invention peut être mis en oeuvre de la manière suivante.

La substance protéique est réduite par broyage à l'état de fine mouture dont la granulométrie est de préférence inférieure à 2 mm.

A la substance résultante est alors ajoutée, à la température ambiante, une suspension ou solution aqueuse de dithiocarbamate, cette opération étant par exemple effectuée dans un mélangeur-homogénéiseur.

Le mélange ainsi obtenu est ensuite introduit dans un réacteur où sa température est portée à 20-115° C par chauffage indirect et injection de vapeur ; le réacteur pourra notamment être constitué par un réacteur rotatif à vitesse lente, éventuellement équipé d'homogénéiseurs rapides d'appoint. On précisera qu'à la température de 20° C, la quantité d'eau mise en oeuvre sera avantageusement de 200 à 300 % en poids de la substance protéique et qu'à la température de 115° C, elle sera avantageusement de 10 à 45 % en poids de la substance protéique.

La pression dans le réacteur pourra être fixée entre 1.10⁻⁵ et 10.10⁻⁵ Pa et la durée de réaction variera entre 10 mn et 15 heures. Cette durée pourra être courte si l'on opère à température et pression élevées et longue si l'on opère à température et pression faibles. La substance tannée est ensuite pelletisée dans des presses classiques, puis refroidie et son taux d'humidité est réajusté avant stockage.

A des fins d'illustration non limitative de l'invention, on donnera encore les exemples ci-après :

### Exemple 1 :

Un tourteau d'arachide (à 4 % d'humidité de constitution) a été additionné de 8,5 % en poids d'eau et de 0,089 % en poids de SONAPAC 78. Le mélange résultant a été porté à 100° C pendant 15 mn. Il en est résulté une baisse du taux d'azote soluble du tourteau de 45 % à 29 %, un tel résultat ne pouvant être atteint avec le formol qu'en utilisant une dose sensiblement 10 fois supérieure, soit 0,82 % en poids d'une solution à 30 % (p/v) de formol.

Par ailleurs, la dégradabilité théorique de ce tourteau traité, mesurée in sacco au cours de tests effectués sur des animaux (vaches) fistulés s'élevait à environ 70 % pour environ 83 % pour le tourteau non traité.

### Exemple 2 :

Le même tourteau d'arachide que dans l'exemple 1, a été additionné de 9 % en poids d'eau, puis traité par 0,15 % en poids de SONAPAC 78, à 100° C pendant 20 mn. Le tourteau a vu son taux d'azote soluble baisser de 45 % à 19 %, la dégradabilité théorique étant réduite à 50 % contre 83 % pour le témoin.

### Exemple 3 :

Un tourteau de coton additionné de 9,5 % en poids d'eau et traité par 0,21 % en poids de SONAPAC 78, à 100° C pendant 30 mn, a vu son taux d'azote soluble baisser de 46 % à 12 %.

## Revendications

1. Procédé de tannage d'une substance protéique, notamment d'origine végétale comme les protéines d'oléagineux, caractérisé en ce qu'il comprend le traitement de ladite substance protéique par un composé de type dithiocarbamate, partiellement dégradé par un acide fort.

2. Procédé selon la revendication 1, caractérisé en ce que le composé de type dithiocarbamate répond à la formule : 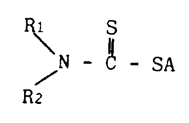 dans laquelle A = H ou métal alcalin et R₁ et R₂ représentent indépendamment l'un de l'autre H, alkyle en C₁-C₄ ou cycloalkyle en C₃-C₇.

3. Procédé selon la revendication 2, caractérisé en ce que A représente le sodium.

4. Procédé selon la revendication 1, 2 ou 3, caractérisé en ce que le composé est le diméthyldithiocarbamate de sodium.

5. Procédé selon l'une des revendications précédentes, caractérisé en ce que l'acide fort est l'acide chlorhydrique.

6. Procédé selon l'une des revendications précédentes, caractérisé en ce que la quantité de composé de type dithiocarbamate mis en oeuvre est de 0,01 à 5 % par rapport au poids de matières azotées totales de la substance protéique.

7. Procédé selon l'une des revendications précédentes, caractérisé en ce que la quantité d'acide fort est de 4 à 10 % en poids du composé de type dithiocarbamate.

8. Procédé selon l'une quelconque des revendications précédentes, caractérisé en ce que le traitement est effectué en présence d'un bactéricide.

9. Procédé selon la revendication 8, caractérisé en ce que ledit bactéricide est le diméthyltétrahydrothiadiazine.

10. Procédé selon l'une quelconque des revendications précédentes, caractérisé en ce que la substance protéique est choisie dans le groupe comprenant les tourteaux de graines oléagineuses, les graines de céréales, les farines de céréales et leurs mélanges.

11. Procédé selon l'une quelconque des revendications 1 à 10, caractérisé en ce que la substance protéique est constituée par un tourteau de graines oléagineuses détoxiqué par traitement par une base.

12. Substance protéique tannée obtenue conformément au procédé selon l'une quelconque des revendications 1 à 11.

13. Agent de tannage des protéines, caractérisé en ce qu'il comprend un composé de type dithiocarbamate, partiellement dégradé par un acide fort.

14. Agent de tannage selon la revendication 13, caractérisé en ce que le composé de type dithiocarbamate est tel que défini à l'une des revendications 2 à 4.

## Patentansprüche

1. Verfahren zum Gerben einer proteinhaltigen Substanz, insbesondere pflanzlichen Ursprungs, wie von Proteinen von Ölsaaten, **dadurch gekennzeichnet,** daß es die Behandlung der proteinhaltigen Substanz durch eine Verbindung vom Dithiocarbamat-Typ, die teilweise durch eine starke Säure abgebaut ist, umfaßt.

2. Verfahren nach Anspruch 1, **dadurch gekennzeichnet,** daß die Verbindung von Dithiocarbamat-Typ der Formel entspricht: 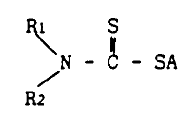 in welcher A = H oder Alkalimetall und R₁ und R₂ unabhängig voneinander H, C₁-C₄-Alkyl oder C₃-C₇-Cycloalkyl bedeuten.

3. Verfahren nach Anspruch 2, **dadurch gekennzeichnet,** daß A Natrium bedeutet.

4. Verfahren nach Anspruch 1, 2 oder 3, **dadurch** **gekennzeichnet,** daß die Verbindung Natriumdimethyldithiocarbamat ist.

5. Verfahren nach einem der vorhergehenden Ansprüche, **dadurch gekennzeichnet,** daß die starke Säure Chlorwasserstoffsäure ist.

6. Verfahren nach einem der vorhergehenden Ansprüche, **dadurch gekennzeichnet,** daß die eingesetzte Menge der Verbindung vom Dithiocarbamat-Typ 0,01 bis 5 %, bezogen auf das Gewicht der gesamten stickstoffhaltigen Materialien der proteinhaltigen Substanz, ist.

7. Verfahren nach einem der vorhergehenden Ansprüche, **dadurch gekennzeichnet,** daß die Menge der starken Säure 4 bis 10 Gew.-% der Verbindung vom Dithiocarbamat-Typ ist.

8. Verfahren nach einem der vorhergehenden Ansprüche, **dadurch gekennzeichnet,** daß die Behandlung in Gegenwart eines Bakterizids durchgeführt wird.

9. Verfahren nach Anspruch 8, **dadurch gekennzeichnet,** daß das Bakterizid Dimethyltetrahydrothiadiazin ist.

10. Verfahren nach einem der vorhergehenden Ansprüche, **dadurch gekennzeichnet,** daß die proteinhaltige Substanz ausgewählt ist aus der Gruppe umfassend die Ölkuchen von Ölsaaten, Getreidesaaten, Getreidemehlen und ihren Gemischen.

11. Verfahren nach einem der Ansprüche 1 bis 10, **dadurch** **gekennzeichnet,** daß die proteinhaltige Substanz aus einem Ölkuchen von Ölsaaten besteht, der durch Behandlung mit einer Base entgiftet wurde.

12. Gegerbte proteinhaltige Substanz, die nach einem Verfahren nach einem der Ansprüche 1 bis 11 erhalten wurde.

13. Mittel zum Gerben von Proteinen, **dadurch gekenn****zeichnet,** daß es eine Verbindung vom Dithiocarbamat-Typ, die teilweise durch eine starke Säure abgebaut ist, umfaßt.

14. Mittel zum Gerben nach Anspruch 13, **dadurch** **gekennzeichnet,** daß die Verbindung vom Dithiocarbamat-Typ wie in einem der Ansprüche 2 bis 4 definiert ist.

## Claims

1. Process for tanning a protein substance, in particular one of vegetable origin such as oil seed proteins, characterized in that it includes the treatment of the said protein substance using a dithiocarbamate type compound, partially degraded by a strong acid.

2. Process according to claim 1, characterized in that the dithiocarbamate type compound has the formula: 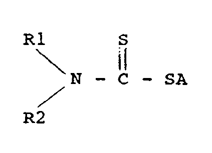 wherein A = H or alkaline metal, and R1 and R2 represent, independently of one another, H, C1-C4 alkyl or C3-C7 cycloalkyl.

3. Process according to claim 2, characterized in that A represents sodium.

4. Process according to claim 1, 2 or 3, characterized in that the compound is sodium dimethyldithiocarbamate.

5. Process according to one of the preceding claims, characterized in that the strong acid is hydrochloric acid.

6. Process according to one of the preceding claims, characterized in that the quantity of dithiocarbamate type compound used represents 0.01 to 5% of the weight of total nitrogen materials of the protein substance.

7. Process according to one of the preceding claims, characterized in that the quantity of strong acid is 4 to 10% by weight of the dithiocarbamate type compound.

8. Process according to any one of the preceding claims, characterized in that the treatment is carried out in the presence of a bactericide.

9. Process according to claim 8, characterized in that the said bactericide is dimethyltetrahydrothiadiazine.

10. Process according to any one of the preceding claims, characterized in that the protein substance is chosen from the group including oilcakes of oleaginous seeds, cereal grains, cereal flours and their mixtures.

11. Process according to any one of claims 1 to 10, characterized in that the protein substance is constituted by an oilcake of oleaginous seeds detoxicated by treatment with a base.

12. Tanned protein substance obtained in conformity with the process according to any one of claims 1 to 11.

13. Protein tanning agent, characterized in that it includes a dithiocarbamate type compound, partially degraded by a strong acid.

14. Tanning agent according to claim 13, characterized in that the dithiocarbamate type compound is as defined in one of claims 2 to 4.
